# EUROPÄISCHE PATENTSCHRIFT

(11) **EP 3 274 156 B1**
(45) Veröffentlichungstag und Bekanntmachung des Hinweises auf die Patenterteilung: **26.08.2020**
(21) Anmeldenummer: 16714265.2
(22) Anmeldetag: 17.03.2016
(51) Int. Cl.: B29C 64/129, B29C 64/153, B33Y 10/00, B33Y 30/00

(54) **VERFAHREN UND VORRICHTUNG ZUR URFORMUNG EINES 3D-KÖRPERS**
METHOD AND DEVICE FOR FORMING A 3D BODY
PROCÉDÉ ET DISPOSITIF DESTINÉS AU FORMAGE PRIMAIRE D'UN CORPS 3D

(30) Priorität: 24.03.2015 EP 15160560
(43) Veröffentlichungstag der Anmeldung: 31.01.2018
(73) Patentinhaber: Schweiger, Severin, 81667 München (DE)
(72) Erfinder: Schweiger, Severin, 81667 München (DE)
(74) Vertreter: Schneider, Sascha
(86) Internationale Anmeldenummer: PCT/EP2016/055786
(87) Internationale Veröffentlichungsnummer: WO 2016/150809

(56) Entgegenhaltungen:
- WO-A1-00/00344
- WO-A1-92/20505
- WO-A2-2015/053644

## Beschreibung

Die vorliegende Erfindung betrifft ein Verfahren zur Urformung eines 3D-Körpers aus einem fusionierbaren und/oder aushärtbaren Material gemäß Anspruch 1 sowie eine Vorrichtung gemäß Anspruch 9.

Bei der generativen Fertigung von 3D-Körpern (auch additive manufacturing genannt) wird ein Gegenstand durch Hinzufügen, Auftragen und Ablagern von Material anhand eines digitalen Modells erzeugt. Im Gegensatz dazu wird bei subtraktiven Verfahren Rohmaterial (beispielsweise mittels Fräsen, Drehen, Bohren) durch mechanische Abtragung von Material bearbeitet.

Als Vorlage für die Produktion dient im Regelfall ein digitales 3D-Modell, das in maschinenlesbaren Code übersetzt und automatisiert verarbeitet wird.

Neben additiven und subtraktiven Verfahren unterscheidet man noch zwischen formenden Verfahren und hybriden Verfahren.

Bei den generativen Verfahren sind Verfahren zum 3D-Druck mit Pulver wie beispielsweise selektives Lasersintern (selective laser sintering, SLS), Elektronenstrahlschmelzen (electron beam melting, EBM), 3D-Druck mittels geschmolzenem Material wie beispielsweise Schmelzschichtung (fused filament fabrication, FFF) oder 3D-Druck mit flüssigem Material wie beispielsweise Stereolithographie digital light processing (DLP), (multi jet modeling (MJM) oder Filmtransfer Imaging-Verfahren bekannt.

Als nächstliegender Stand der Technik wird die WO 92/20505 genannt, die ein Verfahren und eine Vorrichtung zur Urformung eines 3D-Körpers aus einem aushärtbaren Material mit den Schritten, - Anordnung des aushärtbaren Materials in einem Matrixraum mit einer aus X-Koordinaten, Y-Koordinaten und Z-Koordinaten bestehenden Matrix,- Festlegung von den 3D-Körper definierenden, jeweils eine X-Koordinate, eine Y-Koordinate und eine Z-Koordinate aufweisenden Matrixpunkten im Matrixraum,- Beaufschlagung des aushärtbaren Materials an den Matrixpunkten mit überlagerten und zumindest teilweise sequentiell auf die Matrixpunkte gerichteten Ultraschallwellen zur Aushärtung des aushärtbaren Materials und Urformung des 3D-Körpers offenbart.

Aufgabe der vorliegenden Erfindung ist es, ein Verfahren und eine Vorrichtung zur Urformung eines 3D-Körpers anzugeben, mit welchen mit möglichst geringem Energieaufwand und möglichst geringem Zeitbedarf qualitativ hochwertige 3D-Körper ausgebildet werden können.

Diese Aufgabe wird mit den Merkmalen der Patentansprüche 1 und 9 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegeben Merkmalen. Bei angegebenen Wertebereichen sollen auch innerhalb der genannten Grenzen liegende Werte als Grenzwerte offenbart gelten und in beliebiger Kombination beanspruchbar sein.

Grundgedanke der vorliegenden Erfindung ist es, ein fusionierbares, insbesondere pulverförmiges, und/oder aushärtbares, insbesondere fluides, Material in einem Matrixraum anzuordnen und anschließend das fusionierbare und/oder aushärtbare Material an den 3D-Körper definierenden Matrixpunkten innerhalb des Matrixraums mit Ultraschallwellen zu fusionieren und/oder auszuhärten.

Ein erfindungsgemäßer Aspekt besteht somit insbesondere darin, das gesamte fusionierbare und/oder aushärtbare Material, aus dem der 3D-Körper gebildet wird, vor einer Beaufschlagung zum Fusionieren und/oder Aushärten in einem Matrixraum anzuordnen. Hierdurch kann die Herstellung des 3D-Körpers deutlich beschleunigt werden, insbesondere im Vergleich zu den bisher bekannten Schichtverfahren.

Ein weiterer Aspekt der vorliegenden Erfindung besteht insbesondere darin, von außerhalb des Matrixraums beziehungsweise von außerhalb der Außenkontur des 3D-Körpers oder von außerhalb eines den Matrixraum definierenden Gehäuses zur Aufnahme des fusionierbaren und/oder aushärtbaren Materials die den 3D-Körper definierenden Matrixpunkte in einer, softwareberechnet, festgelegten Reihenfolge, insbesondere von einem von den Ultraschallgebern entfernten Matrixpunkt beginnend, zu beaufschlagen.

Gemäß einem weiteren, vorteilhaften Aspekt der vorliegenden Erfindung werden Ultraschallwellen aus mindestens zwei, vorzugsweise mindestens vier, noch bevorzugter mindestens acht, noch bevorzugter mindestens 16, noch bevorzugter mindestens 32, noch bevorzugter mindestens 64, Ultraschallgebern derart überlagert, dass in dem jeweils beaufschlagten Matrixpunkt ein Energiemaximum erzeugt wird, das zur Fusionierung und/oder Aushärtung des fusionierbaren und/oder aushärtbaren Materials im Bereich des Matrixpunkts geeignet ist. Hierzu ist insbesondere eine Phased-Array-Anordnung der Ultraschallgeber geeignet.

In Weiterbildung der vorliegenden Erfindung ist insbesondere eine Steuerungseinrichtung vorgesehen, die mindestens eine oder mehrere der nachfolgend aufgeführten Steuerungsaufgaben übernimmt:
- Phasenverschiebung der Ultraschallgeber zueinander,
- Frequenz, Amplitude, Modulation und/oder Phasenlänge der Ultraschallwellen jedes Ultraschallgebers,
- Abarbeitung der Sequenz der Beaufschlagung der Matrixpunkte,
- Vorheizen des fusionierbaren und/oder aushärtbaren Materials,
- Verdichtung des fusionierbaren, pulverförmigen Materials, vor und/oder während der Beaufschlagung,
- Fokussierung der Ultraschallwellen der Ultraschallgeber, insbesondere durch Überlagerung (Summe der Ultraschallwellen),
- Übersetzung (insbesondere durch softwaregestützte Berechnung) der dreidimensionalen Geometriedaten des 3D-Körpers in abzuarbeitende Matrixpunkte,
- Steuerung von Ultraschallimpulsen, insbesondere nach dem Phased-Array-Prinzip,
- Strahlungsrichtung der Ultraschallgeber, insbesondere durch, vorzugsweise gemeinsame, Bewegung der Ultraschallgeber oder Gruppen von Ultraschallgebern,
- Steuerung eines regelbaren Phasenschiebers.

Die Steuerungseinrichtung kann insbesondere weitere, nachfolgend aufgeführte Steuerungsaufgaben übernehmen.

Mit anderen Worten besteht ein erfindungsgemäßer Aspekt insbesondere darin, selektiv im Inneren eines in einem Matrixraum angeordneten fusionierbaren und/oder aushärtbaren Materials punktuelle Beaufschlagung mit Ultraschallwellen zur Aushärtung oder Fusionierung zu bewirken.

Die Anordnung des fusionierbaren und/oder aushärtbaren Materials in einem Matrixraum erfolgt insbesondere in einem, vorzugsweise verschließbaren, Gehäuse, das insbesondere den Matrixraum mittels Koordinaten definiert. X-, Y- und Z-Koordinaten können vorzugsweise ein kartesisches Koordinatensystem oder ein Polarkoordinatensystem bilden. Das Koordinatensystem korreliert insbesondere mit den dreidimensionalen Geometriedaten des 3D-Körpers oder ist mit diesen korrelierbar und insbesondere für Vektorberechnungen verwendbar.

Gemäß einer vorteilhaften Ausführungsform wird eine durch X- und Y-Koordinaten gebildete X-Y-Ebene parallel zu der Lage der Ultraschallgeber angeordnet. Die Z-Koordinate bildet in diesem Fall den Abstand der Matrixpunkte oder des Fokuspunkts zu den Ultraschallgebern ab.

Eine Fokussierung der Ultraschallwellen an den Matrixpunkten erfolgt insbesondere durch Erzeugung eines Energiemaximums im Bereich des Matrixpunktes, vorzugsweise durch Erzeugung einer Interferenz der Ultraschallwellen der mindestens zwei Ultraschallgeber im Bereich des Matrixpunktes. Durch den hierdurch erzeugten lokalen Energieeintrag in zumindest teilweise von nicht fusionierten und/oder nicht ausgehärteten, fusionierbarem und/oder aushärtbarem Material umgebenen Bereich des Matrixpunktes können alle Matrixpunkte, insbesondere ohne Bewegung der Ultraschallgeber oder einer Gruppe von Ultraschallgebern oder aller Ultraschallgeber relativ zum Matrixraum, sequentiell beaufschlagt werden.

Das Phased-Array-Prinzip ist eine gerichtete Abstrahlung von Ultraschallimpulsen einer Sonde. Eine Richtungsbeeinflussung wird mittels eines Gruppenstrahlers vorgenommen. Dieser Gruppenstrahler befindet sich vorzugsweise in einem gemeinsamen Gebergehäuse und weist insbesondere mehrere, vorzugsweise mehr als vier, noch bevorzugter mehr als acht, noch bevorzugter mehr als 16, noch bevorzugter mehr als 32, noch bevorzugter mehr als 64 Einzelstrahler auf. Die Einzelstrahler arbeiten vorzugsweise mit Piezo-elementen oder noch bevorzugter mit kapazitiven Ultraschallgebern, insbesondere Capacitive micromachined ultrasonic transducers (CMUT).

Die Ultraschallgeber sind gemäß einer vorteilhaften Ausführungsform der Erfindung so anordenbar und/oder ansteuerbar, dass mehrere Fokuspunkte gleichzeitig mit Ultraschall beaufschlagt werden können. Durch diese Maßnahme wird der Herstellungsvorgang beschleunigt.

Gemäß einer vorzugsweisen Ausführungsform der Erfindung ist mindestens einer der Ultraschallgeber, vorzugsweise alle Ultraschallgeber, in der Lage, Ultraschallwellen nicht nur zu senden, sondern auch zu empfangen. Hierdurch können im fusionierbaren und/oder aushärtbaren Material vorhandene Strukturen (beispielsweise zusätzliche Bauteile, Metalleinsätze, Elektronik etc.), insbesondere vor der Beaufschlagung und/oder Festlegung der Matrixpunkte, erfasst werden. Bei aushärtbarem Material kann vor einer Einbringung von Strukturen in das aushärtbare Material eine teilweise Beaufschlagung zur Ausbildung von Stützstrukturen erfolgen.

Gemäß einer weiteren vorteilhaften Ausführungsform der vorliegenden Erfindung beginnt die Beaufschlagung mit weiter von den Ultraschallgebern entfernten Matrixpunkten und endet mit näher an den Ultraschallgebern angeordneten Matrixpunkten. Somit wird die Beaufschlagung der Matrixpunkte sequentiell derart gesteuert, dass vorzugsweise zu keinem Zeitpunkt der Beaufschlagung zwischen einen noch nicht fusionierten und/oder ausgehärteten Matrixpunkt und den Ultraschallgebern ein bereits beaufschlagter Matrixpunkt angeordnet ist. Der Vorteil dieser Vorgehensweise liegt darin, dass das Gebergehäuse gegenüber dem Gehäuse zur Aufnahme des fusionierbaren und/oder aushärtbaren Materials nicht bewegt werden muss. Das Gebergehäuse kann demnach insbesondere starr an dem Gehäuse zur Aufnahme des fusionierbaren und/oder aushärtbaren Materials anordenbar oder angeordnet sein.

Ein vorteilhafter Aspekt der vorliegenden Erfindung besteht darin, dass das fusionierbare und/oder aushärtbare Material während der Beaufschlagung des fusionierbaren und/oder aushärtbaren Materials und Urformung aller Matrixpunkte, insbesondere in einem kontinuierlichen Beaufschlagungsschritt, bis zum Ende der Beaufschlagung nicht bewegt werden muss.

In Weiterbildung werden zumindest überwiegend, vorzugsweise ausschließlich, benachbarte Matrixpunkte nacheinander (sequentiell) beaufschlagt. Die Beaufschlagung erfolgt somit insbesondere entlang einer mäanderförmigen Bahn von Matrixpunkten, wobei eine Richtungsänderung und Fokussierung des Schallbündels, insbesondere ausschließlich, durch Ansteuerung der Ultraschallgeber, vorzugsweise mittels eines regelbaren Phasenschiebers, erfolgt.

Alternativ können mehrere, insbesondere benachbarte, Matrixpunkte parallel/gleichzeitig beaufschlagt werden, insbesondere durch Bildung von Gruppen von jeweils mindestens zwei Ultraschallgebern.

Vorzugsweise werden Abstände zwischen benachbarten Matrixpunkten derart gewählt, dass auch das zwischen den benachbarten Matrixpunkten angeordnete fusionierbare und/oder aushärtbare Material durch die Beaufschlagung der benachbarten Matrixpunkte vollständig fusioniert und/oder aushärtet.

Der lokale Energieeintrag erfolgt vorzugsweise dadurch, dass die Ultraschallwellen im jeweils beaufschlagten Matrixpunkt fokussiert werden und/oder eine, insbesondere für das fusionierbare und/oder aushärtbare Material spezifische, Interferenz bilden. Bevorzugt wird hierbei auf das Phased-Array-Prinzip zurückgegriffen.

Ein, insbesondere eigenständiger Aspekt der vorliegenden Erfindung besteht darin, die Ultraschallgeber so anzusteuern, dass der jeweils beaufschlagte Matrixpunkt im Fokus der Ultraschallwellen oder an der Superposition der Ultraschallwellen liegt. Entscheidend ist insbesondere, dass im Matrixpunkt eine konstruktive Interferenz erzeugt wird. Die dadurch induzierte Energie sorgt für eine Fusion oder Aushärtung des Materials um den (infinitesimal kleinen) Matrixpunkt herum, wobei das fusionierte oder ausgehärtete Volumen abhängig von den Parametern der Ultraschallgeber sowie deren Anordnung und Ansteuerung ist. Die Energie, die notwendig ist, um das jeweilige Material zu fusionieren oder auszuhärten, hängt von der Materialart sowie zusätzlichen äußeren Faktoren wie insbesondere Temperatur und Druck im Matrixraum ab.

Erfindungsgemäß ist es denkbar, einen oder mehrere Nebenfokuspunkte der Ultraschallwellen der Ultraschallgeber zur Beaufschlagung und/oder Erwärmung und/oder Verbesserung der Temperaturverteilung zu verwenden.

Insbesondere kann auch die geometrische Form und Größe (Volumen) des mit konstruktiver Interferenz gebildeten Fokusvolumens beeinflusst werden. Hierdurch kann das Volumen, in welchem um den Matrixpunkt fusioniert und/oder ausgehärtet wird, minimiert werden. Vorzugsweise ist das Volumen kleiner als 1 cm³, noch bevorzugter kleiner als 1 mm³, noch bevorzugter kleiner 500 µm³, noch bevorzugter kleiner als 200 µm³.

Zur Vermeidung von Lufteinschlüssen ist es gemäß einer Ausführungsform der vorliegenden Erfindung bevorzugt, wenn das fusionierbare Material vor und/oder während der Beaufschlagung verdichtet wird. Bevorzugt wird erfindungsgemäß ein Material verwendet, das kleine Partikelgrößen aufweist, um Zwischenräume zu minimieren und die Dichte auf Grund der Materialeigenschaften zu erhöhen. Hierdurch werden die akustischen Eigenschaften des Materials verbessert, so dass ein besserer Energieeintrag erfolgen kann. Weiterhin werden die mechanischen Eigenschaften des erzeugten Produkts verbessert. Die Partikelgrößen werden insbesondere zwischen 10nm und 10mm, vorzugsweise zwischen 50nm und 1mm, noch bevorzugter zwischen 100nm und 10µm gewählt. Vorzugsweise wird ein polydisperses Material ausgewählt, damit die Partikelverteilung nicht zu eng ist. Hierdurch werden unerwünschte Zwischenräume minimiert. Auch eine zu breite Partikelgrößenverteilung sollte vermieden werden, da sonst die Rauheit des Bauteils höher bzw. dessen Auflösung schlechter werden.

Soweit die Ultraschallgeber in einem Gebergehäuse zusammengefasst sind, das an einer, insbesondere eine Öffnung zum Durchtritt der Ultraschallwellen aufweisenden, Wand des Gehäuses angeordnet ist, lässt sich die Vorrichtung platzsparend realisieren. Ein weiterer Vorteil besteht darin, dass die Anordnung der Ultraschallgeber relativ zur Matrixform und relativ zu den Koordinaten der Matrixpunkte fix ist und somit vorzugsweise nur eine einmalige Kalibrierung der Ultraschallgeber notwendig ist.

Um die durch die Ultraschallstrahlung notwendige Energie zum Fusionieren und/oder Aushärten des fusionierbaren und/oder aushärtbaren Materials im jeweiligen Matrixpunkt zu minimieren, ist gemäß einer vorzugsweisen Ausführungsform der Erfindung eine Heizeinrichtung zum Aufheizen/Temperieren des im Gehäuse angeordneten fusionierbaren und/oder aushärtbaren Materials auf eine Beaufschlagungstemperatur vorgesehen. Die Beaufschlagungstemperatur liegt vorzugsweise unterhalb einer Schmelztemperatur des fusionierbaren Materials oder unterhalb einer Aktivierungstemperatur des aushärtbaren Materials, insbesondere in einem Temperaturbereich von mindestens 1° Celsius unterhalb bis höchstens 100° Celsius unterhalb der Schmelztemperatur oder der Aktivierungstemperatur, vorzugsweise mindestens 10° Celsius unterhalb und maximal 50° Celsius unterhalb der Schmelztemperatur oder der Aktivierungstemperatur.

Die Druckbeaufschlagung zur Verdichtung des fusionierbaren Materials wird gemäß einer vorteilhaften Ausführungsform der Erfindung durch eine Druckbeaufschlagungseinrichtung realisiert.

Durch die oben beschriebenen Maßnahmen werden insbesondere folgende Vorteile beziehungsweise vorteilhafte Ausgestaltungen erreicht:
- keine Bewegung des fusionierbaren und/oder aushärtbaren Materials während der, vorzugsweise kontinuierlichen, Beaufschlagung/Sinterung des fusionierbaren und/oder aushärtbaren Materials. Hieraus ergibt sich eine höhere Geschwindigkeit, Genauigkeit und geringere Fehleranfälligkeit,
- keine Fremdbauteile wie Rakel oder eine Höhenverstellung am 3D-Körper, da der 3D-Körper von dem nicht beaufschlagten fusionierbaren und/oder aushärtbaren Material bis zur Fertigstellung gehalten wird und das fusionierbare und/oder aushärtbare Material anschließend auf einfache Weise entfernbar ist,
- weitgehende bis vollständige Freiheit bei der Form des 3D-Körpers,
- keine Supportstrukturen notwendig,
- keine Inertgas- und/oder Druckluftversorgung notwendig,
- keine wartungsanfällige Optik notwendig,
- zusätzlich Bauteile wie Materialeinsätze, Elektronik etc. können mitverarbeitet werden, soweit diese bis zur Schmelztemperatur oder Aktivierungstemperatur temperaturbeständig sind,
- ein Materialgradient ist realisierbar, insbesondere durch Anordnung verschiedener Pulversorten im Matrixraum.

Gemäß einer vorteilhaften Ausführungsform der Erfindung wird wenigstens ein Ultraschallgeber, vorzugsweise alle Ultraschallgeber oder das Gebergehäuse innerhalb des Gehäuses und somit innerhalb des Gehäuses und/oder innerhalb des Matrixraums angeordnet. Hierdurch wird eine etwaige Phasengrenze an einer Gehäusewand vermieden. Alternativ kann hierzu auch eine Öffnung in der Gehäusewand im Bereich der Ultraschallgeber vorgesehen sein.

Gemäß einer weiteren vorteilhaften Ausführungsform der Erfindung sind mehrere Gruppen von Ultraschallgebern beziehungsweise mehrere Gebergehäuse an verschiedenen, insbesondere jeweils gegenüberliegenden, Seiten des Gehäuses angeordnet oder anordenbar. Hierdurch kann das Bauvolumen und/oder die Geschwindigkeit der Urformung erhöht werden.

Gemäß einer weiteren vorteilhaften Ausführungsform der Erfindung werden die elektrischen Signale zur Ultraschallerzeugung vor Eintritt in die Ultraschallwandler durch einen elektronischen Leistungsverstärker gesendet, dessen Abwärme vorzugsweise zur Erwärmung des fusionierbaren und/oder aushärtbaren Materials zu verwenden ist, insbesondere unter Verwendung eines Wärmetauschers.

Als fusionierbares und/oder aushärtbares Material kommen insbesondere folgende Materialien oder Materialklassen in Frage:
- Kunststoff-, Keramik- und/oder Metallpulver, insbesondere aus Mikro-oder Nanopartikeln, vorzugsweise Polyamid PA, Polypropylen PP und/oder
- Fluide, insbesondere Harze oder Polymere.

Die Behandlungstemperatur beziehungsweise Vorheiztemperatur liegt insbesondere zwischen 100° Celsius und 500° Celsius, vorzugsweise zwischen 150° Celsius und 300° Celsius, noch bevorzugter zwischen 150° Celsius und 160° Celsius, insbesondere in Verbindung mit Polypropylen PP. Die Schmelztemperatur von Polypropylen PP liegt bei 165° Celsius.

Bevorzugt ist das Gehäuse thermisch isoliert ausgebildet, um eine möglichst konstante Beaufschlagungstemperatur zu ermöglichen und möglichst wenig Energie zu verbrauchen.

Bei einer Größe des Matrixraumes von 10cm x 10cm x 10cm ist als zeitlicher Ablauf insbesondere folgender erfindungsgemäß denkbar:
- Vorheizen auf die Beaufschlagungstemperatur für 10 Minuten bis 60 Minuten, vorzugsweise für 20 bis 40 Minuten,
- Beaufschlagung mit Ultraschall für 10 Sekunden bis 10 Minuten, vorzugsweise 30 Sekunden bis 5 Minuten, noch bevorzugter 30 Sekunden bis 2 Minuten,
- Abkühlen für 10 Minuten bis 2 Stunden, vorzugsweise 30 Minuten bis 90 Minuten, vorzugsweise 50 Minuten bis 70 Minuten.

Eine Pulververdichtung kann insbesondere bei einem Druck zwischen 2 bar und 20 bar, vorzugsweise zwischen 5 bar und 15 bar, noch bevorzugter zwischen 8 bar und 12 bar erfolgen.

Ein Fokussierabstand der Ultraschallgeber zum Matrixpunkt liegt insbesondere zwischen 5 mm und 500 mm, noch bevorzugter zwischen 10 mm und 200 mm, noch bevorzugter zwischen 10 mm und 100 mm.

Ein erfindungsgemäß insbesondere bevorzugter Energieeintrag pro Volumen beim Beaufschlagen der Matrixpunkte liegt zwischen 10 mJ/mm³ und 30000 mJ/mm³, vorzugsweise zwischen 20 mJ/mm³ und 20000 mJ/mm³, noch bevorzugter zwischen 30 mJ/mm³ und 10000 mJ/mm³. Der notwendige Energieeintrag hängt sehr stark von dem Material und von der zu leistenden Energiedifferenz ab.

Gemäß einer vorteilhaften Ausführungsform der Erfindung werden Gruppen von Matrixpunkten gebildet, die, insbesondere aus unterschiedlichen Richtungen, von jeweils mindestens zwei Ultraschallgebern beaufschlagt werden. Vorzugsweise wird der 3D-Körper in eine entsprechende Zahl von Teilkörpern aufgeteilt, die den Gruppen von Matrixpunkten entsprechen.

Gemäß einem, insbesondere eigenständigen, Aspekt der vorliegenden Erfindung wird das fusionierbare und/oder aushärtbare Material während der Beaufschlagung mit Ultraschall, vorzugsweise kontinuierlich, durch den Matrixraum bewegt. Auf diese Weise kann eine kontinuierliche Urformung von mehreren, insbesondere beliebig vielen, 3D-Körpern in einem kontinuierlichen Prozess erfolgen.

Dabei wird die Beaufschlagung des fusionierbaren und/oder aushärtbaren Materials an einem Eintritt des fusionierbaren und/oder aushärtbaren Materials in den Matrixraum gestartet und bei einem Austritt aus dem Matrixraum beendet. Beim Austritt liegt vorzugsweise ein urgeformter 3D-Körper vor. Alternativ können mehrere Matrixräume zur Urformung von Teilen des 3D-Körpers hintereinander angeordnet werden.

Die Bewegung des fusionierbaren und/oder aushärtbaren Materials erfolgt insbesondere entlang eines, insbesondere röhrenförmigen, Förderkanals, an dessen Eingang vorzugsweise ein Fördermittel zum Bewegen des fusionierbaren und/oder aushärtbaren Materials entlang des Förderkanals angeordnet ist. Als Fördermittel ist insbesondere eine Förderschnecke geeignet.

Im Bereich des Ausgangs des Förderkanals wird der urgeformte 3D-Körper, insbesondere automatisiert, zumindest überwiegend von dem nicht fusionierten oder ausgehärteten Material getrennt, wobei das nicht fusionierte oder ausgehärtete Material gemäß einer vorteilhaften Ausführungsform für einen weiteren Urformungsprozess wieder in den Förderkanal zurückgeführt wird.

Die Ultraschallgeber sind insbesondere innerhalb des Förderkanals, vorzugsweise in einem innerhalb des Förderkanals verlaufenden, insbesondere röhrenförmigen, Ultraschallgeberkanal zur Aufnahme der Ultraschallgeber, angeordnet. Der Ultraschallgeberkanal verläuft vorzugsweise parallel und mittig in dem Förderkanal. Durch die Anordnung der Ultraschallgeber in dem Ultraschallgeberkanal wird der Matrixraum definiert. Es ist erfindungsgemäß denkbar, mehrere Matrixräume am Umfang des Ultraschallgeberkanals auszubilden, so dass mehrere 3D-Körper parallel urgeformt werden können.

Soweit Verfahrensmerkmale offenbart wurden, sollen diese auch als Vorrichtungsmerkmale offenbart gelten und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung. Diese zeigt in:
- Figur 1a:: eine schematische, perspektivische Darstellung einer Ausführungsform einer erfindungsgemäßen Vorrichtung,
- Figur lb:: eine schematische Darstellung eines ersten Verfahrensschritts einer Ausführungsform des erfindungsgemäßen Verfahrens,
- Figur 1c:: eine schematische Darstellung eines zweiten Verfahrensschritts der Ausführungsform gemäß Figur 1b,
- Figur 1d:: eine schematische Darstellung eines mit der Ausführungsform gemäß Figuren 1b und 1c urgeformten 3D-Körpers,
- Figur 2a: eine schematische Aufsicht auf eine erste Ausführungsform einer Anordnung von Ultraschallgebern,
- Figur 2b: eine schematische Aufsicht auf eine zweite Ausführungsform einer Anordnung von Ultraschallgebern,
- Figur 2c: eine schematische Aufsicht auf eine dritte Ausführungsform einer Anordnung von Ultraschallgebern und
- Figur 3: eine schematische Ansicht einer kontinuierlichen Ausführungsform der erfindungsgemäßen Vorrichtung.

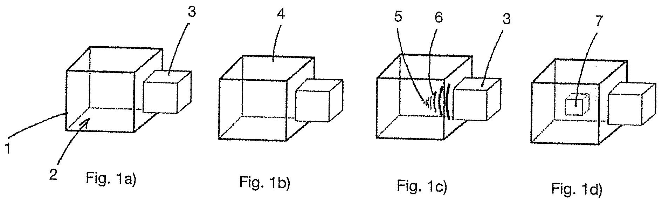

Figur 1 zeigt ein Gehäuse 1, das einen Matrixraum 2 umgibt und definiert. An einer Seitenwand des Gehäuses 1 ist ein Gebergehäuse 3 angeordnet und vorzugsweise fixierbar.

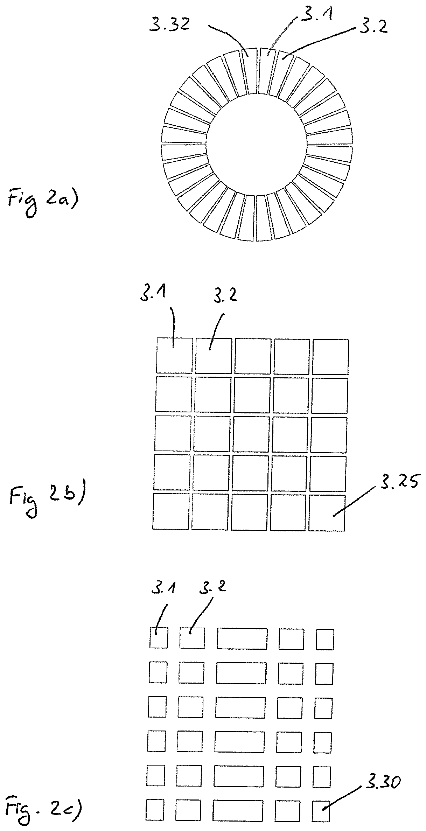

In dem Gebergehäuse 3 ist eine Vielzahl (n) von Ultraschallgebern 3.1, 3.2 bis 3.n angeordnet (siehe Figuren 2a, 2b und 2c), die Ultraschallwellen in Richtung des Matrixraums 2 und in den Matrixraum 2 hinein ausstrahlen können. Die Ultraschallwellen der Ultraschallgeber 3.1, 3.2 bis 3.n werden durch eine Steuerungseinrichtung (nicht dargestellt) gesteuert. Die Steuerungseinrichtung ist vorzugsweise innerhalb des Gebergehäuses 3 angeordnet.

In dem in Figur 1b gezeigten Verfahrensschritt wird ein fusionierbares, pulverförmiges Material 4 in dem Matrixraum 2 angeordnet und gegebenenfalls verdichtet und/oder auf eine Beaufschlagungstemperatur vorgeheizt. Die Beaufschlagungstemperatur liegt insbesondere unterhalb einer Schmelz- beziehungsweise Sintertemperatur des fusionierbaren Materials.

In dem in Figur 1c gezeigten Verfahrensschritt wird das fusionierbare Material 4 in einem Matrixpunkt 5 mit einem gerichteten und fokussierten Ultraschallstrahl 6 beaufschlagt. Der Ultraschallstrahl 6 wird in dem Matrixpunkt 5 konzentriert beziehungsweise fokussiert (Superposition), sodass ein Energiemaximum der überlagerten Ultraschallstrahlen der Ultraschallgeber 3.1, 3.2 bis 3.n in den Matrixpunkt 5 erzeugt wird. Der Energieeintrag reicht aus, um das fusionierbare Material 4 im Bereich des Matrixpunktes 5 zu schmelzen/sintern.

Nacheinander werden eine Vielzahl von Matrixpunkten 5 entsprechend dem in Figur 1c gezeigten Verfahrensschritt mit Ultraschallstrahlen beaufschlagt, wobei die Matrixpunkte 5 einen 3D-Körper 7 definieren, der nach Beaufschlagung aller den 3D-Körper 7 definierenden Matrixpunkte 5 fertiggestellt ist.

Das den 3D-Körper 7 umgebende fusionierbare Material 4 wird nicht mit einer zum Sintern/Schmelzen ausreichenden Energie beaufschlagt, sodass das verbleibende fusionierbare Material 4 für einen weiteren Schmelz-/Sintervorgang verwendet werden kann.

Bei der Ausführungsform gemäß Figur 2a sind 32, insbesondere identisch ausgebildete, Ultraschallgeber 3.1 bis 3.32 als Gruppe von ringförmig angeordneten Ultraschallgebern 3.1 bis 3.32 in einer X-Y-Ebene zusammengeschlossen, die von einer Steuerungseinrichtung jeweils separat angesteuert werden. Durch Steuerung der von den Ultraschallgebern 3.1 bis 3.32 ausgegebenen Ultraschallwellen nach dem phased-array-Prinzip kann in einer einstellbaren Entfernung in Z-Richtung (orthogonal zur X-Y-Ebene) eine konstruktive Interferenz gebildet werden (Fokussierung). Durch die konstruktive Interferenz wird das fusionierbare Material 4 lokal an dieser Stelle fusioniert (hier: geschmolzen), während die übrigen Wellen destruktiv interferieren und somit keine Fusionierung bewirken.

Die Position des Fokus kann nicht nur in Z-Richtung durch die Steuerungseinrichtung eingestellt werden, sondern auch parallel zur X-Y-Ebene. Somit kann nahezu jeder beliebige Punkt im Abstrahlbereich beziehungsweise Strahlengang der Gruppe von Ultraschallgebern 3.1 bis 3.32 angesteuert werden, insbesondere ohne eine Bewegung der Ultraschallgeber 3.1 bis 3.32 und/oder des Gebergehäuses 3.

Die Fokussierung wird insbesondere so gesteuert, dass die Ultraschallwellen im jeweiligen Matrixpunkt 5 maximal interferieren (Superposition) und die Interferenzenergie somit am jeweiligen Matrixpunkt 5 maximal ist. Insbesondere wird die Fokussierung und/oder Überlagerung der Ultraschallwellen derart gesteuert, dass die Interferenz(energie) mit Abstand zum Matrixpunkt 5 möglichst schnell abnimmt. Somit wird ein möglichst kleines Volumen um den Matrixpunkt 5 fusioniert und/oder ausgehärtet.

Alternative Anordnungen sind in den Figuren 2b und 2c gezeigt, wobei in der Figur 2b 25, insbesondere identisch ausgebildete und als Rechteckraster angeordnete, Ultraschallgeber und in der Figur 2c 30 konkav zur Zeichnungsebene gekrümmt verlaufende, Ultraschallgeber enthalten sind.

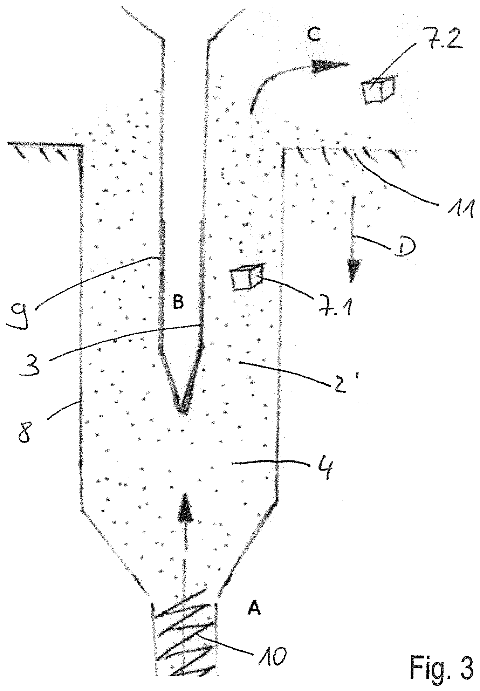

Bei der in Figur 3 gezeigten kontinuierlichen Ausführungsform wird das fusionierbare und/oder aushärtbare Material 4 während der Beaufschlagung mit Ultraschall, vorzugsweise kontinuierlich, durch einen Matrixraum 2' bewegt. Auf diese Weise kann eine kontinuierliche Urformung von mehreren, insbesondere beliebig vielen, 3D-Körpern 7.1, 7.2 in einem kontinuierlichen Prozess erfolgen.

Dabei wird die Beaufschlagung des fusionierbaren und/oder aushärtbaren Materials 4 an einem Eintritt des fusionierbaren und/oder aushärtbaren Materials 4 in den Matrixraum 2' gestartet und bei einem Austritt aus dem Matrixraum beendet. Beim Austritt liegt vorzugsweise ein urgeformter 3D-Körper 7.1, 7.2 vor. Alternativ können mehrere Matrixräume 2' zur Urformung von Teilen des 3D-Körpers 7.1, 7.2 hintereinander angeordnet werden. Der Bereich, in welchem die Urformung stattfindet, ist als Urformbereich B gekennzeichnet.

Die Bewegung des fusionierbaren und/oder aushärtbaren Materials 4 erfolgt entlang eines röhrenförmigen Förderkanals 8 (siehe Förderpfeil), an dessen Eingang A vorzugsweise ein Fördermittel zum Bewegen des fusionierbaren und/oder aushärtbaren Materials entlang des Förderkanals 8 angeordnet ist. Als Fördermittel ist insbesondere eine Förderschnecke 10 geeignet.

Im Bereich des Ausgangs C des Förderkanals 8 wird der urgeformte 3D-Körper 7.1, 7.2, insbesondere automatisiert, zumindest überwiegend von dem nicht fusionierten oder ausgehärteten Material 4 getrennt, wobei das nicht fusionierte oder ausgehärtete Material 4 gemäß einer vorteilhaften Ausführungsform für einen weiteren Urformungsprozess wieder in den Förderkanal 8 zurückgeführt wird. Die Rückführung D (siehe Rückführungspfeil) erfolgt insbesondere durch die Schwerkraft, indem der Förderkanal 8 gemäß einer vorzugsweisen Ausführungsform der Erfindung, insbesondere senkrecht stehend angeordnet ist. Vorzugsweise ist der Eingang A unterhalb des Ausgangs C angeordnet.

Die Trennung der urgeformten 3D-Körper 7.1, 7.2 von dem nicht fusionierten oder ausgehärteten Material 4 erfolgt insbesondere durch Trennmittel, insbesondere Siebe 11. Die Trennmittel sind insbesondere an dem Förderkanal 8 integral ausgebildet, vorzugsweise als abgewinkelte, näherungsweise waagrecht verlaufende, Öffnungen zum Sieben aufweisende, Wand des Förderkanals 8.

Die Ultraschallgeber 3.1, 3.2 bis 3.n sind insbesondere innerhalb des Förderkanals 8, vorzugsweise in einem innerhalb des Förderkanals 8 verlaufenden, insbesondere röhrenförmigen, Ultraschallgeberkanal 9 zur Aufnahme der Ultraschallgeber 3.1, 3.2 bis 3.n, angeordnet. Der Ultraschallgeberkanal 9 verläuft vorzugsweise parallel und mittig in dem Förderkanal 8. Durch die Anordnung der Ultraschallgeber 3.1, 3.2 bis 3.n in dem Ultraschallgeberkanal 9 wird der Matrixraum 2' definiert. Es ist erfindungsgemäß denkbar, mehrere Matrixräume 2' am Umfang des Ultraschallgeberkanals 9 auszubilden, so dass mehrere 3D-Körper 7.1, 7.2 parallel urgeformt werden können.

### Bezugszeichenliste

- 1: Gehäuse
- 2, 2': Matrixraum
- 3: Gebergehäuse
- 3.1, 3.2 bis 3.n: Ultraschallgeber
- 4: fusionierbares und/oder aushärtbares Material
- 5: Matrixpunkt
- 6: Ultraschallstrahl
- 7, 7.1, 7.2: 3D-Körper
- 8: Förderkanal
- 9: Ultraschallgeberkanal
- 10: Förderschnecke
- A: Eingang
- B: Urformbereich
- C: Ausgang
- D: Rückführung

## Patentansprüche

1. Verfahren zur Urformung eines 3D-Körpers (7) aus einem fusionierbaren und/oder aushärtbaren Material (4) mit folgenden Schritten, insbesondere folgendem Ablauf:
- Anordnung des fusionierbaren und/oder aushärtbaren Materials (4) in einem Matrixraum (2) mit einer aus X-Koordinaten, Y-Koordinaten und Z-Koordinaten bestehenden Matrix,
- Festlegung von den 3D-Körper (7) definierenden, jeweils eine X-Koordinate, eine Y-Koordinate und eine Z-Koordinate aufweisenden Matrixpunkten (5) im Matrixraum (2),
- Beaufschlagung des fusionierbaren und/oder aushärtbaren Materials (4) an den Matrixpunkten (5) mit überlagerten und zumindest teilweise sequentiell auf die Matrixpunkte (5) gerichteten Ultraschallwellen aus mindestens zwei Ultraschallgebern (3.1, 3.2 bis 3.n) zur Fusionierung und/oder Aushärtung des fusionierbaren und/oder aushärtbaren Materials (4) und Urformung des 3D-Körpers (7) in einer softwareberechneten Reihenfolge.

2. Verfahren nach Anspruch 1, bei dem die Beaufschlagung mit weiter von den Ultraschallgebern (3.1, 3.2 bis 3.n) entfernten Matrixpunkten (5) beginnt und mit näher an den Ultraschallgebern (3.1, 3.2 bis 3.n) angeordneten Matrixpunkten (5) endet.

3. Verfahren nach einem der vorhergehenden Ansprüche, bei dem zumindest überwiegend benachbarte Matrixpunkte (5) nacheinander beaufschlagt werden.

4. Verfahren nach einem der vorhergehenden Ansprüche, bei dem Abstände zwischen benachbarten Matrixpunkten (5) derart gewählt werden, dass auch das zwischen den benachbarten Matrixpunkten (5) angeordnete fusionierbare und/oder aushärtbare Material (4) durch die Beaufschlagung der benachbarten Matrixpunkte (5) fusioniert oder aushärtet.

5. Verfahren nach einem der vorhergehenden Ansprüche, bei dem die Beaufschlagung durch Fokussierung des aus den überlagerten Ultraschallwellen gebildeten Ultraschallbündels auf den jeweils beaufschlagten Matrixpunkt (5) erfolgt.

6. Verfahren nach einem der vorhergehenden Ansprüche, bei dem die Ultraschallgeber (3.1, 3.2 bis 3.n) durch einen Phasenschieber angesteuert werden.

7. Verfahren nach einem der vorhergehenden Ansprüche, bei dem die Ultraschallwellen im jeweils beaufschlagten Matrixpunkt (5) eine, insbesondere für das fusionierbare und/oder aushärtbare Material (4) spezifische, Interferenz bilden.

8. Verfahren nach einem der vorhergehenden Ansprüche, bei dem das fusionierbare Material (4) pulverförmig ist und insbesondere vor und/oder während der Beaufschlagung verdichtet wird.

9. Vorrichtung zur Urformung eines 3D-Körpers (7) aus einem fusionierbaren und/oder aushärtbaren pulverförmigen Material (4) mit:
- einem einen Matrixraum (2) mit einer aus X-Koordinaten, Y-Koordinaten und Z-Koordinaten bestehenden Matrix definierenden Gehäuse (1) zur Aufnahme des fusionierbaren und/oder aushärtbaren Materials (4),
- einer Steuerungseinrichtung zur Festlegung von den 3D-Körper (7) definierenden, jeweils eine X-Koordinate, Y-Koordinate und Z-Koordinate aufweisenden Matrixpunkten (5) im Matrixraum (2),
- mindestens zwei Ultraschallgeber (3.1, 3.2 bis 3.n) zur Beaufschlagung des fusionierbaren und/oder aushärtbaren Materials (4) an den Matrixpunkten (5) mit überlagerten und zumindest teilweise sequentiell auf die Matrixpunkte (5) gerichteten Ultraschallwellen zur Fusionierung und/oder Aushärtung des fusionierbaren und/oder aushärtbaren Materials (4) und Urformung des 3D-Körpers (7) im Gehäuse (1)in einer softwareberechneten Reihenfolge.

10. Vorrichtung nach Anspruch 9, wobei die Ultraschallgeber (3.1, 3.2 bis 3.n) in einem Gebergehäuse (3) zusammengefasst sind, das an einer, insbesondere eine Öffnung zum Durchtritt der Ultraschallwellen aufweisenden, Wand des Gehäuses (1) angeordnet ist.

11. Vorrichtung nach Anspruch 9 oder 10, die eine Heizeinrichtung zum Aufheizen des im Gehäuse (1) angeordneten fusionierbaren und/oder aushärtbaren Materials (4) auf eine Beaufschlagungstemperatur aufweist.

12. Vorrichtung nach einem der Ansprüche 9 bis 11, die eine Druckbeaufschlagungseinrichtung zur Verdichtung des pulverförmigen, fusionierbaren Materials (4) vor und/oder während der Beaufschlagung des pulverförmigen, fusionierbaren Materials (4) mit Ultraschallwellen aufweist.

## Claims

1. Method for forming a 3D body (7) from a fusible and/or curable material (4) with the following steps, in particular the following sequence:
- Arranging of the fusible and/or curable material (4) in a matrix space (2) with a matrix consisting of X-coordinates, Y-coordinates and Z-coordinates,
- Setting of matrix points (5) in the matrix space (2) defining the 3D bodies (7) and each having an X-coordinate, a Y-coordinate and a Z-coordinate,
- Exposing of the fusible and/or curable material (4) at the matrix points (5) to superimposed ultrasonic waves from at least two ultrasonic transmitters (3.1, 3.2 to 3.n) directed at least partially sequentially to the matrix points (5) for fusing and/or curing the fusible and/or curable material (4) and forming the 3D body (7) in a software-calculated sequence.

2. Method according to claim 1, in which the exposing begins with matrix points (5) further away from the ultrasonic transducers (3.1, 3.2 to 3.n) and ends with matrix points (5) arranged closer to the ultrasonic transducers (3.1, 3.2 to 3.n).

3. Method according to one of the preceding claims, in which at least predominantly adjacent matrix points (5) are successively exposed.

4. Method according to one of the preceding claims, in which distances between adjacent matrix points (5) are selected in such a way that the fusible and/or curable material (4) arranged between the adjacent matrix points (5) is also fused or cured by the exposure of the adjacent matrix points (5).

5. Method according to one of the preceding claims, in which the exposing is applied by focusing the ultrasonic beam formed from the superimposed ultrasonic waves on the respectively exposed matrix point (5).

6. Method according to one of the preceding claims, in which the ultrasonic transmitters (3.1, 3.2 to 3.n) are controlled by a phase shifter.

7. Method according to one of the preceding claims, in which the ultrasonic waves in the exposed matrix point (5) in each case form an interference which is specific in particular to the fusible and/or curable material (4).

8. Method according to one of the preceding claims, in which the fusible material (4) is in powder form and is compacted in particular before and/or during the application.

9. Apparatus for forming a 3D body (7) from a fusible and/or curable powdery material (4) with:
- a housing (1) defining a matrix space (2) with a matrix consisting of X-coordinates, Y-coordinates and Z-coordinates for receiving the fusible and/or curable material (4),
- a control device for setting matrix points (5) in the matrix space (2) defining the 3D bodies (7) and each having an X-coordinate, Y-coordinate and Z-coordinate,
- at least two ultrasonic transmitters (3.1, 3.2 to 3.n) for applying superimposed ultrasonic waves, which are directed at least partially sequentially to the matrix points (5), to the fusible and/or curable material (4) at the matrix points (5) for fusing and/or curing the fusible and/or curable material (4) and forming the 3D body (7) in the housing (1) in a software-calculated sequence.

10. Apparatus according to claim 9, wherein the ultrasonic transmitters (3.1, 3.2 to 3.n) are combined in a transmitter housing (3) which is arranged on a wall of the housing (1), in particular one which has an opening for the passage of the ultrasonic waves.

11. Apparatus according to claim 9 or 10, which has a heating device for heating the fusible and/or curable material (4) arranged in the housing (1) to an exposure temperature.

12. Apparatus according to one of claims 9 to 11, which has a pressurising device for compacting the powdery, fusible material (4) before and/or during the application of ultrasonic waves to the powdery, fusible material (4).

## Revendications

1. Procédé de formation d'un corps 3D (7) à partir d'un matériau fusible et/ou durcissable (4) avec les étapes suivantes, en particulier la séquence suivante :
- Disposition du matériau fusible et/ou durcissable (4) dans un espace matriciel (2) avec une matrice composée de coordonnées X, de coordonnées Y et de coordonnées Z,
- Détermination des points matriciels (5) dans l'espace matriciel (2) définissant les corps 3D (7) et ayant chacun une coordonnée X, une coordonnée Y et une coordonnée Z,
- Exposition du matériau fusible et/ou durcissable (4) au niveau des points de la matrice (5) à des ondes ultrasonores superposées provenant d'au moins deux émetteurs ultrasonores (3.1, 3.2 à 3.n) dirigés au moins partiellement séquentiellement vers les points de la matrice (5) pour la fusion et/ou le durcissement du matériau fusible et/ou durcissable (4) et la formation du corps 3D (7) dans une séquence calculée par logiciel.

2. Procédé selon la revendication 1, dans lequel l'exposition commence par des points de matrice (5) plus éloignés des transducteurs ultrasonores (3.1, 3.2 à 3.n) et se termine par des points de matrice (5) disposés plus près des transducteurs ultrasonores (3.1, 3.2 à 3.n).

3. Procédé selon l'une des revendications précédentes, dans laquelle au moins des points de matrice (5) essentiellement adjacents sont successivement exposés.

4. Procédé selon l'une des revendications précédentes, dans lequel les distances entre des points de matrice (5) adjacents sont choisies de telle sorte que le matériau fusible et/ou durcissable (4) disposé entre les points de matrice (5) adjacents est également fondu ou durci par l'exposition des points de matrice (5) adjacents.

5. Procédé selon l'une des revendications précédentes, dans lequel l'exposition se fait par focalisation du faisceau ultrasonore formé à partir des ondes ultrasonores superposées sur le point de matrice (5) respectivement exposé.

6. Procédé selon l'une des revendications précédentes, dans lequel les émetteurs d'ultrasons (3.1, 3.2 à 3.n) sont commandés par un déphaseur.

7. Procédé selon l'une des revendications précédentes, dans lequel les ondes ultrasonores dans le point matriciel exposé (5) forment dans chaque cas une interférence qui est spécifique en particulier au matériau fusible et/ou durcissable (4).

8. Procédé selon l'une des revendications précédentes, dans lequel le matériau fusible (4) est sous forme de poudre et est compacté en particulier avant et/ou pendant l'application.

9. Appareil pour former un corps 3D (7) à partir d'un matériau pulvérulent fusible et/ou durcissable (4) avec :
- un boîtier (1) définissant un espace matriciel (2) avec une matrice composée de coordonnées X, de coordonnées Y et de coordonnées Z pour recevoir le matériau fusible et/ou durcissable (4),
- un dispositif de contrôle pour déterminer les points matriciels (5) dans l'espace matriciel (2) définissant les corps 3D (7) et ayant chacun une coordonnée X, une coordonnée Y et une coordonnée Z,
- au moins deux émetteurs d'ultrasons (3.1, 3.2 à 3.n) pour appliquer des ondes ultrasonores superposées, qui sont dirigées au moins partiellement de manière séquentielle sur les points de la matrice (5), au matériau fusible et/ou durcissable (4) aux points de la matrice (5) pour la fusion et/ou le durcissement du matériau fusible et/ou durcissable (4) et la formation du corps 3D (7) dans le boîtier (1) dans une séquence calculée par logiciel.

10. Appareil selon la revendication 9, dans lequel les émetteurs d'ultrasons (3.1, 3.2 à 3.n) sont réunis dans un boîtier d'émetteur (3) qui est disposé sur une paroi du boîtier (1), en particulier qui présente une ouverture pour le passage des ondes ultrasonores.

11. Appareil selon la revendication 9 ou 10, qui comporte un dispositif de chauffage pour chauffer le matériau fusible et/ou durcissable (4) disposé dans le boîtier (1) à une température d'exposition.

12. Appareil selon l'une des revendications 9 à 11, qui comporte un dispositif de pressurisation pour compacter le matériau pulvérulent et fusible (4) avant et/ou pendant l'application d'ondes ultrasonores sur le matériau pulvérulent et fusible (4).
